# EUROPÄISCHE PATENTSCHRIFT

(11) **EP 0 780 944 B1**
(45) Veröffentlichungstag und Bekanntmachung des Hinweises auf die Patenterteilung: **19.08.1998**
(21) Anmeldenummer: 96119273.9
(22) Anmeldetag: 02.12.1996
(51) Int. Cl.: H02G 3/06, H02G 15/013

(54) **Winkel-Kabelverschraubung**
Angled threaded cable gland
Presse-étoupe angulaire

(30) Priorität: 23.12.1995 DE 29520508 U
(43) Veröffentlichungstag der Anmeldung: 25.06.1997
(73) Patentinhaber: JACOB GMBH ELEKTROTECHNISCHE FABRIK, 71394 Kernen im Remstal/Württ. (DE)
(72) Erfinder: Feketitsch, Herbert, 73579 Schechingen/Württ. (DE)
(74) Vertreter: Wolff, Michael, Dipl.-Phys.

(56) Entgegenhaltungen:
- WO-A-95/28759
- DE-U- 9 204 256
- US-A- 4 375 011
- Katalog der Fachfirma PFLITSCH : "Winkel-Kabelverschraubung", Abb. 3 und 4

## Beschreibung

Gegenstand der Erfindung ist eine gewinkelte Kabeldurchführung für elektrotechnische Geräte, gemäß Anspruch 1 oder vorzugsweise Anspruch 2.
Stand der Technik sind Winkel-Kabelverschraubungen gemäß DE 94 06 382 U1 (Jacob) sowie hutmutter- und außenbundlose bzw. mit nur einem Außenbund an einem einzigen Außengewinde versehene Winkel-Kabelverschraubungen ohne Lamellenkäfig.

Nachteil des Gebrauchsmusters ist der aufwendige Gehäuse-Mittelabschnitt (12) gegebenenfalls aus zwei gegeneinander verdrehbaren Teilen (12.1 und 12.2) in Fällen, in denen eine Kabelbiegung um 90° auf kurzer Strecke ohne Probleme möglich ist. - Nachteil der übrigen Winkel-Kabelverschraubungen ist das Fehlen einer besonders wirksamen Abdichtung bzw. einer Abdichtung überhaupt, die verhindert, daß zwischen Kabel und im wesentlichen koaxialem Gehäuse Fluide dieses passieren können.
Aufgabe der Erfindung ist daher die Optimierung der genannten Eigenschaften und Wirkungen einer Winkel-Kabelverschraubung für leicht biegbare Kabel.
Lösung dieser Aufgabe ist die Kabeldurchführung nach Anspruch 1, insbesondere nach Anspruch 2.
Vorteil dieser Lösung ist die einfache Herstellung der erfindungsgemäßen Winkel-Kabelverschraubung und außerdem deren vollständige Abdichtung auch bei variierendem Kabeldurchmesser.

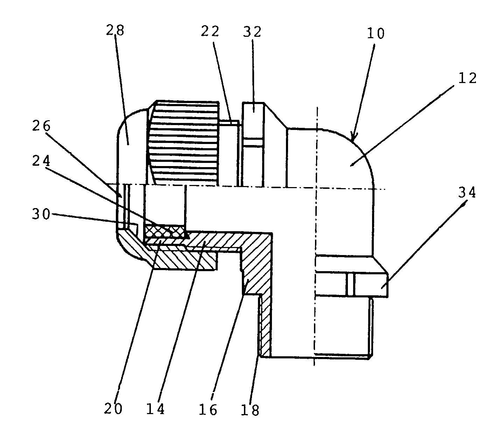

Die Zeichnung zeigt ein bevorzugtes Ausführungsbeispiel der erfindungsgemäßen Winkel-Kabelverschraubung je zur Hälfte in Seitenansicht bzw. als axialen Längsschnitt, mit allen Merkmalen der Ansprüche 1 und 2, in denen die Bezugszahlen auf die speziell gezeichneten Verschraubungsteile hinweisen.

## Patentansprüche

1. Gewinkelte Kabeldurchführung für elektrotechnische Geräte (sogenannte Winkel-Kabelverschraubung), mit einem das durchzuführende Kabel aufnehmenden, zweischenkligen Gehäuse (10), das ein rechtwinkliges, starres Knie (12) aufweist, das von zwei geraden Stutzen (14 und 16) gebildet ist, welche an ihren freien Enden mit einem, gegebenenfalls äußeren, Anschlußgewinde (18) bzw. mit einem angeformten Lamellen (20)-Käfig und einem in Richtung auf das Knie anschließenden Außengewinde (22) versehen sind; mit einem zylindrischen Dichtungsring (24), der reibschlüssig im Lamellen-Käfig (20) sitzt; und mit einer auf das Außengewinde (22) geschraubten, einen axialen Durchbruch (26) für den Durchtritt des Kabels aufweisenden Hutmutter (28), deren innere Kuppelfläche (30) die freien Enden der achsparallelen Lamellen (20) radial gegen den am Kabelmantel anliegenden Dichtungsring (24) preßt.

2. Kabeldurchführung nach Anspruch 1, mit zwei radial an die beiden Stutzen (14 und 16) angeformten sechskantigen Außenbunden (32 und 34) am knienahen Ende des Außengewindes (22) bzw. des äußeren Anschlußgewindes (18).

## Claims

1. An angled cable passage (so-called angled threaded cable gland) for electrotechnical devices,with a double legged case (10) taking up the cable to be passed through, said case having a rectangular rigid knee (12) formed by two straight connection pieces (14 and 16) which are provided each at its free end with an, optionally outside, connecting thread (18) respectively an integral lamella (20) cage and an outside thread (22) following in direction tothe knee; with a cylindrical sealing ring (24) which is frictionally engaged while located in the lamella cage (20); and with a cap nut (28) screwed onto the outside thread (22) and provided with an axial channel (26) for the passage of the cable, the inside dome surface (30) of said cap nut pressing the free ends of the axis parallel lamellas radially against the sealing ring (24) which fits closely to the cable sheath.

2. An angled threaded cable gland according to claim 1, wherein the two connection pieces (14 and 16) have integral radial hexagon outside collars (32 and 34) at both the knee-near end of the outside thread (22) and of the external connecting thread (18), respectively.

## Revendications

1. Passe-câble angulaire pour des appareils électrotechniques (dit presse-étoupe angulaire) avec un boîtier (10) à deux branches par lequel le câble passe et qui a un coude (12) rectangulaire rigide formé par deux tubulures droites (14 et 16) qui sont munies chacune à son bout libre l'une, d'un filetage (18) de raccordement, le cas échéant à l'extérieur, l'autre d'une cage à lamelles (20) faisant corps et suivi, en direction au coude, par un filetage extérieur (22) ;
avec, un anneaux d'étanchéité (24) cylindrique entraîné par friction dans la cage à lamelles (20);
et avec un écrou borgne (28) vissé sur le filetage extérieur (22) et percé axialement (26) pour faire passer le câble, et qui presse par sa surface creux intérieure (30) les bouts libres des lamelles parallèles à l'axe radialement contre l'anneau d'étanchéité (24) qui est en contact avec la gaine de câble.

2. Presse-étoupe angulaire suivant la revendication 1, avec deux collerettes extérieures héxagonales (32 et 34) faisant corps radialement avec les tubulures (14 et 16) l'une sur le bout près du coude du filetage extérieur (22), l'autre sur le bout près du coude du filetage de raccordement (18) extérieur.
